# EUROPEAN PATENT APPLICATION

(11) **EP 4 300 765 A1**
(43) Date of publication of application: **03.01.2024**
(21) Application number: 23182283.4
(22) Date of filing: 29.06.2023
(51) Int. Cl.: H02J 7/00

(54) **METHOD FOR CHARGING PROGRESS DISPLAY, ELECTRONIC DEVICE, AND COMPUTER READABLE STORAGE MEDIUM**

(30) Priority: 30.06.2022 CN 202210777321
(71) Applicant: Nothing Technology Limited, London EC2V 6EE (GB)
(72) Inventor: XU, Qi, Shenzhen City (CN); ZHU, Raymond, London (GB); LI, James, Shenzhen City (CN)
(74) Representative: EIP

(57) **Abstract**

Provided are a method for charging progress display, an electronic device and a computer readable storage medium. The method for charging progress display is applied to display of a charging progress of an electronic device, a light strip and a transparent rear cover are provided on a back side of the electronic device. The method for charging progress display includes the following. When the electronic device is charging, a charging progress of the electronic device is acquired; and the light strip is controlled to emit light according to the charging progress to show the charging progress.

## Description

### BACKGROUND

A mobile device has become a very common electronic product. When a user charges a mobile device, the user needs to light up a screen to check a current charging progress of the mobile device, which is very inconvenient for the user to check a charging situation.

### SUMMARY

In order to solve the described technical problem, this disclosure provides a method for charging progress display, an electronic device, and a computer readable storage medium. By means of a light strip arranged on the back side of an electronic device, a charging progress can be indicated without lighting a screen, so that a user can know the charging progress of the electronic device very conveniently.

A first aspect of the disclosure provides a method for charging progress display, which is applied to the display of a charging progress of an electronic device (also referred to herein as a terminal). A back side of the terminal is provided with a light strip and a transparent rear cover. The transparent rear cover entirely covers the back side of the electronic device provided with the light strip, the back side opposites to a display screen of the electronic device, the light strip is configured to emit light, and the transparent rear cover allows the light emitted by the light strip to pass through. The method for charging progress display includes the following. When the electronic device is charging, a charging progress of the electronic device is acquired, and the light strip is controlled to emit light according to the charging progress to show the charging progress.

A second aspect of the disclosure provides a electronic device. The electronic device includes a light strip, a transparent rear cover, a processor, and a memory. The light strip is provided on a back side of the electronic device, and the back side opposites to a display screen of the electronic device. The transparent rear cover entirely covers the back side of the electronic device and is provided with the light strip, and allows light emitted by the light strip to pass through. The memory stores a computer program, and the processor is configured to run the computer program to execute the described method for charging progress display.

A third aspect of the disclosure provides a computer readable storage medium. The computer readable storage medium stores a computer program, and the computer program is executed after being invoked a processor, so as to implement the foregoing method for charging progress display.

The disclosure provides the method for charging progress display, the electronic device and the computer-readable storage medium, which can indicate a charging progress by means of the light strip arranged on the back side of the electronic device without lighting up a screen, so that a user can know the charging progress of the electronic device very conveniently.

### BRIEF DESCRIPTION OF THE DRAWINGS

To describe the technical solutions of the disclosure more clearly, the following briefly introduces the accompanying drawings required for describing the embodiments. Apparently, the accompanying drawings in the following description show merely some embodiments of the disclosure, and a person of ordinary skill in the art may still derive other drawings from these accompanying drawings without creative efforts.
Fig. 1 is a flowchart of a method for charging progress display according to embodiments of the disclosure.
Fig. 2 is a schematic diagram of a rear structure of a electronic device according to embodiments of the disclosure.
Fig. 3 is a schematic diagram of a target region indicating a charging progress according to embodiments of the disclosure.
FIG 4 is a schematic diagram of a target region indicating another charging progress according to another embodiment of the present disclosure.
Fig. 5 is a structural block diagram of a electronic device according to embodiments of the disclosure.
Fig. 6 is a schematic structural diagram of connection between a light strip, a controller, and a power supply according to embodiments of the disclosure.
Fig. 7 is a structural block diagram of a electronic device according to another embodiment of the disclosure.

Reference numerals: 100-electronic device, 10-light strip, 11-first region, 12-second region, sub-region-111, first sub-region-111a, second sub-region-11 1b, third sub-region-111c, fourth sub-region-111d, fifth sub-region-111e, third region-13, fourth region-14, fifth region-15, camera module-16, transparent rear cover-20, controller-30, storage unit-40, first detecting unit-50, second detecting unit-60, processor-80, memory-90

### DETAILED DESCRIPTION

The following clearly and completely describes the technical solutions in embodiments of the disclosure with reference to the accompanying drawings in embodiments of the disclosure. Apparently, the described embodiments are merely a part rather than all of the embodiments of the disclosure. All other embodiments obtained by a person of ordinary skill in the art based on the embodiments of the disclosure without creative efforts shall belong to the scope of protection of the disclosure.

In the description of the disclosure, the terms "first", "second", "third", "fourth", "fifth", etc. are used for distinguishing different objects, rather than for describing a specific order, In addition, orientations or positional relationships indicated by terms such as "upper", "inner", "outer", etc. are based on the orientation or positional relationships shown in the figures, It is only for the convenience of describing the disclosure and simplifying the description, rather than indicating or implying that the device or element referred to must have a particular orientation, be constructed and operated in a particular orientation, Therefore, it cannot be understood that the present disclosure is limited thereto.

In the description of the disclosure, unless specified or limited otherwise, the term "connection" should be understood broadly, and may be, for example, fixed connections, detachable connections, or integral connections; may also be direct connections or indirect connections via intervening structures; may also be inner communications of two elements; may be a communication connection; may be an electrical connection. The specific meanings of the above terms in the disclosure can be understood by those skilled in the art according to specific situations.

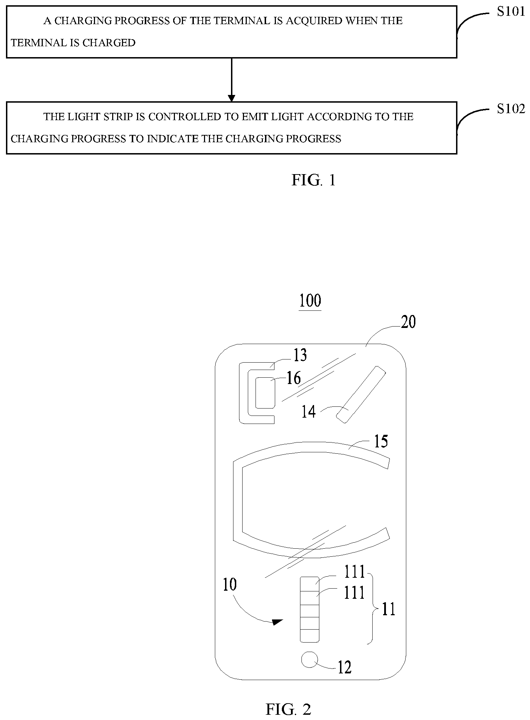

Please refer to Figs. 1 and 2 together, Fig. 1 is a flowchart of a method for charging progress display provided by embodiments of the disclosure, and Fig. 2 is a schematic structural diagram of a rear structure of a electronic device 100 (referred to hereinafter as terminal 100). The charging display method is applied to display of the charging progress of the terminal 100. As shown in FIG. 2, a light strip 10 and a transparent rear cover 20 are provided on the back side of the terminal 100, the transparent rear cover 20 entirely covers the back side of the terminal 100 provided with the light strip 10. The back side is opposite to a display screen of the terminal 100. The light strip 10 is configured to emit light, and the transparent rear cover 20 allows the light emitted by the light strip 10 to pass through. As shown in Fig. 1, the method for charging progress display comprises the following steps.

S101: a charging progress of the terminal 100 is acquired when the terminal 100 is charging.

S102: the light strip 10 is controlled according to the charging progress to emit light, so as to display/show the charging progress.

The method for charging progress display provided in embodiments of the disclosure can show the charging progress through the light strip 10 arranged on the back side of the terminal without lighting up the screen, so that a user can know the charging progress of the terminal 100 very conveniently.

In some embodiments, before step S101 or step S102, the method for charging progress display further includes the following. In response to a setting operation, enabling a function of displaying the charging progress through the light strip 10, so that the light strip 10 can be controlled to emit light according to the charging progress.

In some embodiments, controlling the light strip 10 to emit light according to the charging progress includes the following. A target region of the light strip 10 corresponding to the charging progress is determined according to a pre-stored correspondence between the charging progress and regions of the light strip 10, and the target region is controlled to emit light.

The method for charging progress display provided in embodiments of the disclosure can control the corresponding target region to emit light according to the real-time charging progress when the terminal 100 is charging, so that a user can intuitively know the current charging progress.

In some embodiments, the correspondence between the charging progress and regions of the light strip 10 defines a relation between a plurality of charging progress sections to a plurality of regions of the light strip 10, each charging progress section corresponds to one region of the light strip 1. The target region of the light strip 10 corresponding to the charging progress is determined according to the correspondence between the charging progress and regions of the light strip 10 by: determining a target charging progress section where the charging progress is located; determining, according to the correspondence between the charging progress and regions of the light strip 10, that a region of the light strip 10 corresponding to the target charging progress section is the target region. By controlling the target region of the light strip 10 corresponding to the target charging progress section to emit light, a user can determine, according to a light-emitting region of the light strip 10, a charging progress section where the current charging progress of the terminal 100 is located.

Here, 0-100% can be divided into a plurality of charging progress sections, for example, divided into five charging progress sections, [0, 20%], (20%, 40%], (40%, 60%], (60%, 80%], (80%, 100%], respectively. As will be apparent, it can also be divided into other numbers of charging progress sections, in which the range of each charging progress section can be the same or different.

In some embodiments, as shown in Fig. 2, the light strip 10 includes a first region 11 in a strip-shape, and the first region 11 includes a plurality of sub-regions 111 arranged along an extension direction of the first region 11.

In some embodiments, the length of each sub-region 111 in the extension direction of the first region 11 is the same, the number of sub-regions 111 included in regions corresponding to different charging progress sections is different, and the correspondence between the charging progress and regions of the light strip 10 defines the correspondence between each charging progress section and at least one sub-region 111. Determining, according to the correspondence between the charging progress and regions of the light strip 10, that the region of the light strip 10 corresponding to the target charging progress section is the target region includes the following. Determine, according to the correspondence between the charging progress and regions of the light strip 10, a region formed by the at least one sub-area 111 corresponding to the target charging progress section to be the target region.

The number of the sub-regions 111 included in the regions corresponding to the plurality of charging progress sections may increase as the range value of the charging progress section increases, that is, the larger the range value of the charging progress section is, the more the number of the sub-regions 111 included in the region corresponding to the charging progress section is. Obviously, the number of sub-regions 111 included in the regions corresponding to the plurality of charging progress sections may also be randomly set to different values.

In some embodiments, the region corresponding to the latter one of two adjacent charging progress sections includes a region corresponding to the former one of the charging progress sections and a sub-region 111 adjacent to the region corresponding to the former one of the charging progress sections. Where a lower limit value of the latter charging progress section is greater than an upper limit value of the former charging progress section.

The plurality of sub-regions 111 may include a first sub-region, a second sub-region, an M-th sub-region to an N-th sub-region, the first sub-region, the second sub-region, the M-th sub-region to the N-th sub-region are sequentially arranged in the extension direction of the first region 11. When a region corresponding to a former one of two adjacent charging progress sections is an M-th sub-region, a region corresponding to the latter charging progress section is an (M+1)-th sub-region, in which the M-th sub-region is one of the first sub-region to an (N-1)-th sub-region.

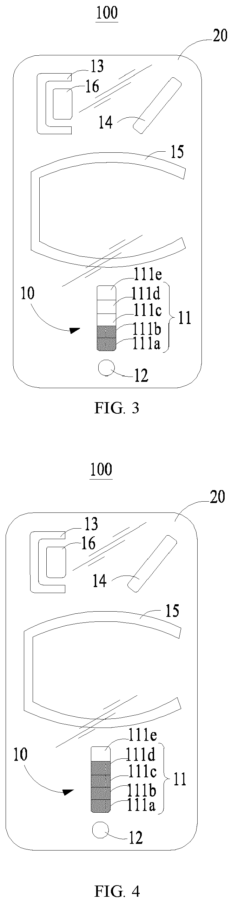

Please refer to Figs. 3 and 4 together, Fig. 3 is a schematic diagram of a target region indicating a charging progress according to embodiments of the disclosure. Fig. 4 is a schematic diagram of a target region indicating another charging progress according to embodiments of the disclosure. For example, as shown in Fig. 3, the plurality of sub-regions 111 include a first sub-region 111a, a second sub-region 111b, a third sub-region 111c, a fourth sub-region 111d, and a fifth sub-region 111e, the plurality of charging progress sections are respectively [0, 20%], (20%, 40%], (40%, 60%], (60%, 80%], (80%, 100%]. The region corresponding to charging progress section [0, 20%] is the first sub-area 111a; the region corresponding to charging progress section (20%, 40%] is a region formed by the first sub-area 111a and the second sub-area 111b; the region corresponding to the charging progress section (40%, 60%] is a region formed by the first sub-region 111a, the second sub-region 11 1b, and the third sub-region 1 11c; the region corresponding to the charging progress section (60%, 80%] is a region formed by the first sub-region 111a, the second sub-region 111b, the third sub-region 111c, and the fourth sub-region 111d; and the region corresponding to the charging progress section (80%, 100%] is a region formed by the first sub-region 111a, the second sub-region 111b, the third sub-region 111c, the fourth sub-region 111d, and the fifth sub-region 111e. When the target charging progress section where the charging progress is located is (20%, 40%], the target region is a region formed by the first sub-region 111a and the second sub-region 111b, as shown in a gray filling area in Fig. 3. When the target charging progress section where the charging progress is located is (60%, 80%], the target region is a region formed by the first sub-region 111a, the second sub-region 111b, the third sub-region 111c, and the fourth sub-region 111d, as shown by a gray filling region in Fig. 4.

In some embodiments, the at least one sub-region 111 included in the region corresponding to each charging progress section may be any at least one of the plurality of sub-regions 111. For example, the region corresponding to the charging progress section [0, 20%] may be any one of the first sub-region 111a, the second sub-region 1 11b, the third sub-region 111c, the fourth sub-region 1 11d, and the fifth sub-region 1 11e. The region corresponding to the charging progress section (20%, 40%] may be a region formed by any two sub-regions in the first sub-region 111a, the second sub-region 111b, the third sub-region 111c, the fourth sub-region 1 11d, and the fifth sub-region 111e. The region corresponding to the charging progress section (60%, 80%] may be a region formed by any four of the first sub-region 111a, the second sub-region 111b, the third sub-region 11 1c, the fourth sub-region 1 11d, and the fifth sub-region 111e. That is, in some embodiments, it only needs to ensure different numbers of sub-regions 111 included in regions corresponding to different charging progress sections, and the region corresponding to a subsequent charging progress section may not necessarily include all regions corresponding to a previous charging progress section.

In some embodiments, the method for charging progress display further includes the following: determining, according to a pre-stored correspondence between a charging progress section and a light-emitting color, a target light-emitting color corresponding to the target charging progress section, and controlling the target region to emit light of the target light-emitting color.

For example, the light-emitting color corresponding to the charging progress section [0, 20%] is red, the light-emitting color corresponding to the charging progress section (20%, 40%] is yellow, the light-emitting color corresponding to the charging progress section (40%, 60%] is orange, the light-emitting color corresponding to the charging progress section (60%, 80%] is blue, and the light-emitting color corresponding to the charging progress section (80%, 100%] is green. When the target charging progress section is [0, 20%], controlling the target region to emit red light, so as to remind a user that the charging progress of the terminal 100 is relatively small and the power of the terminal 100 is relatively low By controlling target regions corresponding to different target charging progress sections to emit light of different colors, the user can directly know the charging progress of the terminal 100 by means of senses for color, where a plurality of colors corresponding to a plurality of charging progress sections can be set according to a color matching mode, thereby improving the appearance of the terminal 100.

In other embodiments, each charging progress section may correspond to one sub-region 111, and the correspondence between the charging progress and regions of the light strip 10 defines the correspondence between each charging progress section and one sub-region 111. Determining, according to the correspondence between the charging progress and regions of the light strip 10, the region of the light strip 10 corresponding to the target charging progress section to be the target region includes the following. Determine a sub-region 111 corresponding to the target charging progress section to be the target region, according to the correspondence between the charging progress and regions of the light strip 10.

For example, the plurality of sub-regions 111 include the first sub-region 111a, the second sub-region 111b, the third sub-region 111c, the fourth sub-region 111d, and the fifth sub-region 111e arranged in the extension direction of the first region 11, the plurality of charging progress sections are respectively [0, 20%], (20%, 40%], (40%, 60%], (60%, 80%], (80%, 100%], the region corresponding to the charging progress section [0, 20%] is the first sub-area 111a, the region corresponding to the charging progress section (20%, 40%] is the second sub-area 111b, the region corresponding to the charging progress section (40%, 60%] is the third sub-area 111c, the region corresponding to the charging progress section (60%, 80%] is the fourth sub-area 111d, and the region corresponding to the charging progress section (80%, 100%] is the fifth sub-region 111e.

The first region 11 of the light strip 10 may be disposed in an area close to the bottom on the back side of the terminal 100, so as to avoid an area where a lens, a fingerprint recognition component and the like of the terminal 100 are located. The extension direction of the first region 11 may be parallel to the long side or the short side of the terminal 100.

The first region 11 may also have other shapes, for example, a fan shape, a triangular shape, and the like.

In some embodiments, as shown in Fig. 2, the light strip 10 further includes a second region 12 spaced apart from the first region 11, and the method for charging progress display further includes the following. When the terminal 100 is charging, controlling the second region 12 to emit light, so as to indicate that the terminal 100 is in a charging state. The user may determine that the terminal 100 is connected to an external power supply and thus in a charging state through a light emitting state of the second region 12.

In some embodiments, controlling the second region 12 to emit light when the terminal 100 is charging includes the following. When the terminal 100 is not fully charged, controlling the second region 12 to emit red light; when the terminal 11 is fully charged, controlling the second region 12 to emit green light. The user may know, from the red light emitted by the second region 12, that the terminal 100 is not fully charged, and may know, from the green light emitted by the second region 12, that the terminal 100 is fully charged, and the power supply may be disconnected to stop charging.

As shown in Fig. 2, the first region 11 is disposed in an area close to the bottom on the back side of the terminal 100, and the extension direction is parallel to the long side of the terminal 100. The second region 12 is located on the back side of the terminal 100 in an area closer to the bottom than the first region 11, and the second region 12 may be in a circular or elliptical shape, and forms a shape similar to an exclamation point (!) with the first region 11.

It is clear that the second region 12 can also take other shapes.

In some embodiments, as shown in Fig. 2, the light strip 10 further includes a third annular region 13, a fourth strip-like region 14 and a fifth annular region 15. The third region 13 may encircle the camera module 16 of the terminal 100, and the fourth region 14 may be disposed at an upper right corner of the back side of the terminal 100. Furthermore, the extension direction of the fourth region 14 may be substantially parallel to the diagonal line of the back side, and the fifth region 15 is arranged in the middle of the back side.

In some embodiments, the correspondence between the charging progress and regions of the light strip 10 defines that a plurality of charging progress sections corresponding to the first region, the second region, the third region, the fourth region, and the fifth region, respectively.

The charging progress 0-100% can be divided into a first charging progress section, a second charging progress section, a third charging progress section, a fourth charging progress sections and a fifth charging progress section, and the five charging progress sections respectively correspond to the first region 11, the second region 12, the third region 13, the fourth region 14, and the fifth region 15.

For example, the plurality of charging progress sections may be respectively [0, 20%], (20%, 40%], (40%, 60%], (60%, 80%], (80%, 100%]. The charging progress section [0, 20%] corresponds to the second region 12, the charging progress section (20%, 40%] corresponds to the first region 11, the charging progress section (40%, 60%] corresponds to the fourth region 14, the charging progress section (60%, 80%] corresponds to the third region 13, and the charging progress section (80%, 100%] corresponds to the fifth region 15. When the target charging progress section is (60%, 80%], control the third region 13 to emit light.

In some embodiments, before step S102, i.e. before the step of controlling the light strip 10 to emit light according to the charging progress to show the charging progress, the method for charging progress display further includes the following: Detecting a pre-set operation, where the pre-set operation includes at least one of an operation of moving the terminal, an operation of inputting a pre-set gesture, a touch operation, or a voice input operation.

Namely, in some embodiments, when the pre-set operation is detected, the step of controlling the light strip 10 to emit light according to the charging progress to show the charging progress is executed.

The preset operation may also be any other operation for waking up the terminal.

The operation of moving the terminal may include panning, turning over, picking up, shaking the terminal 100 which is in a stationary state, and the like.

By detecting a pre-set operation and controlling the light strip 10 to emit light according to the charging progress when a pre-set operation is detected, when the terminal 100 is in a state such as screen-off, the current charging progress of the terminal 100 can be displayed to the user in time in response to the user's pre-set operation.

In some embodiments, the method for charging progress display further includes the following. Control the target region to stop emitting light, after the target region emits light for a preset duration. Thus, not only the requirement of the user to check the charging progress can be satisfied, but also power consumption can be reduced, so that the terminal 100 can be fully charged as soon as possible.

In some embodiments, while controlling the target region to stop emitting light, the second region 12 may also be controlled to stop emitting light, thereby further reducing power consumption.

The preset duration may be set according to user requirements, which is not limited herein.

In some embodiments, before controlling the light strip 10 to emit light according to the charging progress, the method for charging progress display further includes the following. Determine whether the back side of the terminal 100 is blocked and/or whether the back side of the terminal 100 faces upward. The light strip 10 is controlled to emit light according to the charging progress as follows. The light strip 10 is controlled to emit light according to the charging progress, when the back side of the terminal 100 is not blocked and/or the back side of the terminal 100 faces upwards.

When an area of a portion of the back side of the terminal 100 which is blocked is less than or equal to a preset percentage of an area of the back side, determine that the back side of the terminal 100 is not blocked. For example, determine that the back side of the terminal 100 is not blocked when the blocked portion of the back side of the terminal 100 is less than 80% of the back side; determine that the back side of the terminal 100 is blocked when the blocked portion of the back side of the terminal 100 is more than 80% of the back side. The preset percentage may be set by a user according to an actual requirement.

In the method for charging progress display provided in embodiments of the disclosure, determine whether a back side of the terminal 100 is blocked and/or the back side faces upwards; and when the back side is not blocked and/or the back side faces upwards, the light strip 10 is controlled to emit light according to the charging progress, so that the light strip 10 can be prevented from emitting light when the back side is blocked and/or the back side faces downwards, thereby reducing power consumption.

In some embodiments, the method for charging progress display further includes the following. When the back side of the terminal 100 is blocked and the front side of the terminal 100 is not blocked and/or the back side faces downwards, the display screen of the terminal 100 is controlled to light up and display the charging progress.

In the method for charging progress display provided in some embodiments of the disclosure, determine whether the back side of the terminal 100 is blocked and/or the back side faces upwards, and when the back side is blocked and/or the back side faces downwards, the display screen of the terminal 100 is controlled to light up and display the charging progress according to the charging progress, so that the user can conveniently check the charging progress when the back side is blocked and/or the back side faces downwards.

In some embodiments, the method for charging progress display further includes the following. After the display screen lights up and the charging progress is displayed for a preset duration, the display screen is controlled to screen-off, so as to reduce power consumption.

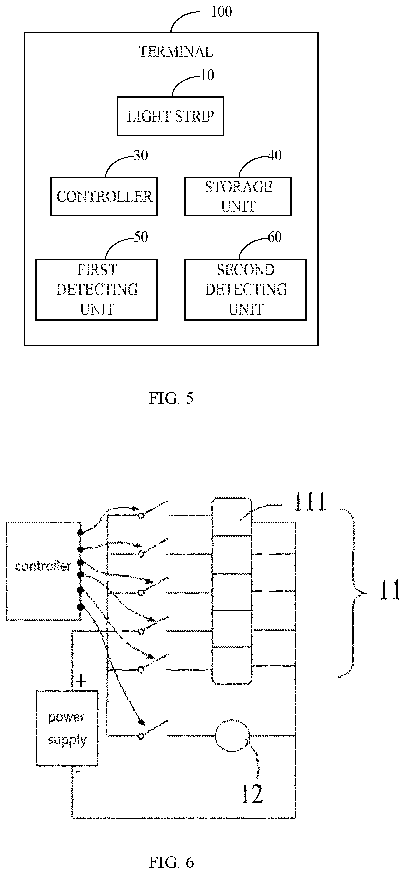

Please refer to Figs. 2 and 5 together, Fig. 5 is a structural block diagram of a terminal 100 according to embodiments of the disclosure. The terminal 100 includes the foregoing light strip 10, the transparent rear cover 20, and a controller 30. As described above, the light strip 10 is disposed on the back side of the terminal 100, and the back side opposites to the display screen of the terminal. The transparent rear cover 20 entirely covers the back side of the terminal 100 and allows light emitted by the light strip 10 to pass through, where the back side is provided with the light strip 10.

The controller 30 is configured to acquire a charging progress of the terminal 100 when the terminal 100 is charging, and is configured to control the light strip 10 to emit light according to the charging progress to show the charging progress.

The terminal 100 provided in embodiments of the disclosure can indicate a charging progress via the light strip 10 arranged on the back side of the terminal, without lighting up a screen, so that a user can know the charging progress of the terminal 100 very conveniently.

The light strip 10 may include a plurality of light emitting diode (LED) light beads, for example, mini LED light beads, micro LED light beads, and common LED light beads. The transparent rear cover 20 may be made of a transparent polymer material, for example, polymethyl methacrylate (PMMA), polycarbonate (PC), transparent acrylonitrile butadiene styrene (ABS), etc.

In some embodiments, the controller 30 is configured to determine, according to a pre-stored correspondence between charging progresses and regions of the light strip 10, a target region of the light strip 10 corresponding to the charging progress, and control the target region to emit light. As shown in Fig. 5, the terminal 100 further includes a storage unit 40, where the correspondence between the charging progress and regions of the light strip 10 may be stored in the storage unit 40.

The storage unit 40 may be a non-volatile memory or the like.

In some embodiments, the correspondence between the charging progress and regions of the light strip 10 defines a relation between a plurality of charging progress sections to a plurality of regions of the light strip 10, each charging progress section corresponds to one region of the light strip 10, and the controller 30 is configured to determine target charging progress section where the charging progress is located, and determine, according to the correspondence between the charging progress and regions of the light strip 10, a region of the light strip 10 corresponding to the target charging progress section to be the target region.

In some embodiments, as mentioned above, as shown in Fig. 2, the light strip 10 includes the first strip-like region 11. The first region 11 includes a plurality of sub-regions 111 arranged along an extension direction of the first region 11. The length of each sub-region 111 in the extension direction of the first region 11 is the same, and the number of sub-regions 111 included in regions corresponding to different charging progress sections is different. The correspondence between the charging progress and regions of the light strip 10 defines the correspondence between each charging progress section and at least one sub-region 111.

The controller 30 is configured to determine, according to the correspondence between the charging progress and regions of the light strip 10, a region formed by at least one sub-region 111 corresponding to the target charging progress section to be the target region.

In some embodiments, the region corresponding to the latter one of the two adjacent charging progress sections includes a region corresponding to the former one of the charging progress sections and a sub-region 111 adjacent to the region corresponding to the former one of the charging progress sections.

In some embodiments, the at least one sub-region 111 included in the region corresponding to each charging progress section may be any at least one of the plurality of sub-regions 111.

In some embodiments, as mentioned above, as shown in Fig. 2, the light strip 10 further includes the second region 12, which is spaced apart from the first region 11. The controller 30 is further configured to control, when the terminal 100 is charging, the second region 12 to emit light, so as to indicate that the terminal 100 is in a charging state.

Please refer to Fig. 6, Fig. 6 is a schematic structural diagram of connection between the light strip 10, the controller 30, and a power supply. As shown in figure 6, the terminal 100 further includes a power supply, a plurality of first switches, and one second switch, in which each of the first switches is connected between the positive pole of the power supply and a sub-region 111, one end of each sub-region 111 is connected to the positive pole of the power supply through a first switch connected to the sub-region 111, the other end of each sub-region 111 is connected to the negative pole of the power supply. The switch of at least one sub-region 111 corresponding to the target charging progress region is controlled to be turned on, to selectively apply a voltage to the at least one sub-region 111 corresponding to the target charging progress section, so that the at least one sub-region 111 corresponding to the target charging progress area emits light. The second switch is connected between the positive pole of the power supply and the second region 12, one end of the second region 12 is connected to the positive pole of the power supply through the second switch, and the other end of the second region 12 is connected to the negative pole of the power supply. By controlling the second switch to be turned on, a voltage can be applied to the second region 12, so that the second region 12 emits light. The first switch and the second switch may be metal oxide semiconductor (MOS) transistors or bipolar junction transistor (BJT) triodes.

As shown in Fig. 6, the controller 30 has a plurality of first pins and one second pin, and each of the first pins is connected to a first switch, the second pin is connected to the second switch, and the controller 30 is configured to output a level signal via the first pin to a first switch connected to the first pin, to control the first switch to be turned on or turned off, and to control the sub-region 111 connected to the first switch to be powered on or not, and output a level signal to the second switch connected to the second pin through the second pin, to control the second switch to be turned on or off, and to control the second region 12 connected to the second switch to be powered on or not.

In some embodiments, the plurality of sub-regions 111 may use the same or different light-emitting color LED lights in advance, so that the light-emitting colors of the plurality of sub-regions 111 are the same or different.

In some embodiments, as mentioned above, as shown in Fig. 2, the light strip 10 further includes the third annular region 13, the fourth strip-like region 14 and the fifth annular region 15. The third region 13 may encircle the camera module 16 of the terminal 100, and the fourth region 14 may be disposed at an upper right corner of the back side of the terminal 100. Furthermore, the extension direction of the fourth region 14 may be substantially parallel to the diagonal line of the back side, and the fifth region 15 is arranged in the middle of the back side.

The correspondence between the charging progress and regions of the light strip 10 defines a plurality of charging progress sections corresponding to the first region 11, the second region 12, the third region 13, the fourth region 14, and the fifth region 15, respectively.

The controller 30 is configured to determine, according to the correspondence, that one of the first region 11, the second region 12, the third region 13, the fourth region 14, and the fifth region 15 corresponding to the target charging progress section is the target region.

In some embodiments, the terminal 100 includes a plurality of third switches, which are connected between the first region 11 and the positive pole of the power supply, the second region 12 and the positive pole of the power supply, the third region 13 and the positive pole of the power supply, the fourth region 14 and the positive pole of the power supply, as well as the fifth region 15 and the positive pole of the power supply, respectively. By selectively controlling the on/off states of the switches of the target regions corresponding to the target charging progress sections, a voltage can be selectively applied to one of the first region 11, the second region 12, the third region 13, the fourth region 14, and the fifth region 15, so that one of the first region 11, the second region 12, the third region 13, the fourth region 14, and the fifth region 15 emits light.

The controller 30 includes a plurality of third pins, each third pin is connected to a third switch. The controller 30 is configured to output a level signal via the third pin to a third switch connected to the third pin, to control the third switch to be turned on or off, and to control one of the first region 11, the second region 12, the third region 13, the fourth region 14, and the fifth region 15 to which the third switch is connected to be powered on or not.

For example, when it is determined that the region corresponding to the target charging progress section is the fifth region 15, the controller 30 outputs a level signal to a third switch connected to the fifth region 15 through a third pin, so as to control the third switch to be turned on, and control the fifth region 15 to be powered on, so that the fifth region 15 emits light.

In some embodiments, as shown in Fig. 5, the terminal 100 further includes a first detecting unit 50 for detecting a pre-set operation, and the controller 30 is configured to control the light strip 10 to emit light according to the charging progress when the first detecting unit 50 detects the pre-set operation.

The first detecting unit 50 may detect whether a pre-set operation exists when the terminal 100 is screen-off, and when the first detecting unit 50 detects the pre-set operation, the controller 30 executes the step of controlling the light strip 10 to emit light according to the charging progress to show the charging progress, thereby facilitating the user in checking the charging progress of the terminal 100.

In some embodiments, the preset operation includes at least one of an operation of moving the terminal, an operation of inputting a preset gesture, a touch operation, or a voice input operation. The controller 30 is configured to control the light strip 10 to emit light according to the charging progress when the first detecting unit 50 detects at least one of the following: a pre-set gesture, a touch operation, a voice, and the movement of the terminal 100.

In some embodiments, the first detecting unit 50 may include an acceleration sensor, which is configured to detect a three-dimensional acceleration of the terminal 100, and determine, according to the detected three-dimensional acceleration, whether the terminal 100 in the stationary state moves. When the acceleration sensor detects that the terminal 100 in a stationary state moves, the controller 30 controls the light strip 10 to emit light according to the charging progress.

In some embodiments, the first detecting unit 50 may include an image sensor, which is configured to collect gesture image information, process the collected gesture image information according to an image recognition algorithm, compare a processing result with a preset gesture, and when a matching degree between the processing result and the preset gesture is greater than a first preset value, determine that the preset gesture is detected. The preset gesture may be stored in the storage unit 40.

In some embodiments, the first detecting unit 50 may include an infrared sensor, which is configured to detect a time difference between emitting light and reflecting light, analyze a gesture according to the time difference, and when a matching degree between the detected gesture and a preset gesture is greater than a second preset value, determine that the preset gesture is detected.

In some embodiments, the first detecting unit 50 may include a sound sensor, which is configured to collect sound signals, compare the collected sound signals with a voice stored in the storage unit 40, and determine that the voice is detected when the matching degree between the collected sound signals and the voice stored in the storage unit 40 is greater than a third preset value.

In some embodiments, the first detecting unit 50 may include a touch sensor, which is configured to determine a touch parameter such as a change in a capacitance or a resistance value, and determine that a touch operation is detected when the touch parameter exceeds a fourth preset value. The touch sensor includes a touch sensor arranged on a touch panel on a display screen, and a touch sensor arranged at a position such as a peripheral frame of the terminal 100.

In some embodiments, the controller 30 is further configured to control the target region to stop emitting light after the target region emits light for a preset duration.

The controller 30 is configured to control, after the target region emits light for a preset duration, a first switch connected to the target region to be turned off to disconnect the target region from the power supply, so that the target region stops emitting light.

In some embodiments, the controller 30 is further configured to control the second region 12 to stop emitting light after the second region 12 emits light for a preset duration.

The controller 30 controls, after the second region 12 emits light for a preset duration, the second switch connected to the second region 12 to be turned off to disconnect the second region 12 from the power supply, so that the second region 12 stop emitting light.

In some embodiments, the controller 30 is further configured to, before controlling the lighting of the light strip 10 according to the charging progress, determine whether the back side of the terminal 100 is blocked and/or whether the back side of the terminal 100 faces upwards, and when the back side of the terminal 100 is not blocked and/or the back side of the terminal 100 faces upwards, control the light strip 10 to light up according to the charging progress.

In some embodiments, as shown in Fig. 5, the terminal 100 further includes a second detecting unit 60, and the second detecting unit 60 may include a first photosensitive element, disposed on the back side of the terminal 100, and configured to detect the light intensity of the back side and send the detected light intensity of the back side to the controller 30. The controller 30 is configured to receive the light intensity of the back side and compare the received light intensity of the back side with a first preset light intensity, and when a ratio of the area of a portion of the back side having a light intensity less than the first preset light intensity to the area of the back side is greater than the first preset percentage, determine that the back side is blocked, and when a ratio of the area of the part of the back side having a light intensity greater than or equal to the first preset light intensity to the area of the back side is smaller than or equal to the first preset percentage, determine that the back side is not blocked.

In some embodiments, the first photosensitive element is arranged close to the light strip 10, and the controller 30 is configured to determine that the back side is blocked when the light intensity detected by the first photosensitive element is less than the first preset light intensity, and determining that the back side is not blocked when the light intensity detected by the first photosensitive element is greater than or equal to the first preset light intensity.

In some embodiments, the second detecting unit 60 may include a gyroscope, and the controller 30 may determine, by using the gyroscope, whether the back side of the terminal 100 faces upwards (that is, back side-up) or downwards (that is, back side-down). Specifically, whether the terminal 100 is back side-up or back side-down may be determined according to positive and negative values of Z axis data of the gyroscope. The controller 30 is configured to control the light strip 10 to emit light according to the charging progress when the back side of the terminal 100 faces upwards. In some embodiments, when the controller 30 determines that back side of the terminal 100 faces downwards by means of the gyroscope, the controller 30 further determines, by means of the gyroscope, whether the terminal 100 is placed horizontally, and if the terminal 100 is placed horizontally, the light strip 10 is controlled not to emit light. The controller 30 may determine whether the terminal 100 is placed horizontally through X-axis and Y-axis data of the gyroscope.

In some embodiments, the controller 30 is further configured to control the display screen of the terminal 100 lighting up and display the charging progress when the back side of the terminal 100 is blocked and the front side of the terminal 100 is not blocked and/or the back side the terminal 100 faces downwards.

In some embodiments, the second detecting unit 60 further includes a second photosensitive element, which is disposed on the front side of the terminal 100, and is configured to detect the light intensity of the front side and send the detected light intensity of the front side to the controller 30. The controller 30 is configured to receive the light intensity of the front side, and compare the received light intensity of the front side with a second preset light intensity, and when a ratio of the area of a portion of the front side having a light intensity less than the second preset light intensity to the area of the front side is greater than a second preset percentage, determine that the front side is blocked, and when a ratio of an area of a portion of the front side having a light intensity greater than or equal to a second preset light intensity to the area of the front side is smaller than or equal to the second preset percentage, determine that the front side is unobstructed.

In some embodiments, the controller 30 may determine, according to the gyroscope, whether the back side the terminal 100 faces downwards, and when the back side the terminal 100 faces downwards, that is, the front side faces upwards, control the display screen of the terminal 100 to light up and display the charging progress.

The terminal 100 corresponds to the foregoing method for charging progress display. For more detailed description, reference may be made to the content of each embodiment of the foregoing method for charging progress display. The terminal 100 and the foregoing method for charging progress display may also be referred to each other. For example, in steps such as step S102, the light strip 10 is controlled to emit light, which may be specifically implemented by using the structure and the control mechanism shown in Fig. 6.

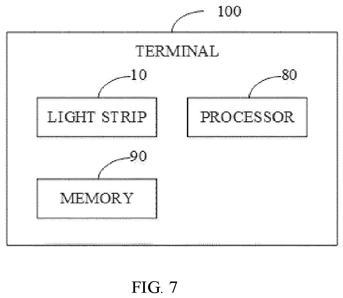

Please refer to Fig. 7, Fig. 7 shows a terminal 100 provided by another embodiment of the disclosure. The light strip 10 and the transparent rear cover 20 are disposed on the back side of the terminal 100, the transparent rear cover 20 entirely covers the back side of the terminal 100 where the light strip 10 is disposed, the back side opposites to a display screen of the terminal 100, the light strip 10 is configured to emit light, and the transparent rear cover 20 allows the light emitted by the light strip 10 to pass through. The terminal 100 further includes a processor 80 and a memory 90, where the memory 90 stores a computer program, and the processor 80 is configured to run the computer program to execute the method for charging progress display provided in any one of the foregoing embodiments.

The terminal (i.e. electronic device) 100 involved in the embodiments of the disclosure may include mobile devices/terminals such as a mobile phone, a tablet computer, a notebook computer, a palmtop computer, a personal digital assistant (PDA), a portable media player (PMP), a navigation apparatus, a wearable device, a smart bracelet, and a pedometer, and fixed terminals such as a digital TV and a desktop computer.

Embodiments of the disclosure further provide a computer readable storage medium. The computer readable storage medium stores a computer program, and the computer program is executed after being invoked by a processor, so as to implement the method for charging progress display provided in any of the foregoing embodiments.

Persons of ordinary skill in the art should understand that all or a part of the steps of the methods in the foregoing embodiments may be implemented by a program instructing relevant hardware. The program may be stored in a computer readable memory, and the memory may include a flash memory disk, a read-only memory, a random access memory, a magnetic disk, or an optical disk.

It should be noted that, for brevity of description, the foregoing method embodiments are described as a series of actions. However, persons skilled in the art should understand that the disclosure is not limited to the described order of actions, because according to the disclosure, some steps may be performed in another order or simultaneously. Secondly, those skilled in the art should also know that the embodiments described in the description are all preferred embodiments, and the involved actions and modules are not necessarily required in the disclosure.

In the above embodiments, the description of each embodiment has its emphasis, and the part not described in detail in a certain embodiment may refer to the relevant description of other embodiments.

The following clauses define further statements of invention:
1. A method for charging progress display, applied to display of a charging progress of a terminal, wherein a back side of the terminal is provided with a light strip and a transparent rear cover, the transparent rear cover entirely covers the back side of the terminal provided with the light strip, wherein the back side opposites to a display screen of the terminal, the light strip is configured to emit light, and the transparent rear cover allows the light emitted by the light strip to pass through, wherein the method for charging progress display comprises: acquiring a charging progress of the terminal when the terminal is charging; and controlling the light strip to emit light according to the charging progress to show the charging progress.
2. The method for charging progress display according to clause 1, wherein controlling the light strip to emit light according to the charging progress comprises: determining, according to a pre-stored correspondence between the charging progress and regions of the light strip, a target region of the light strip corresponding to the charging progress, and controlling the target region to emit light.
3. The method for charging progress display according to clause 2, wherein the correspondence defines a relation between a plurality of charging progress sections and a plurality of regions of the light strip, each charging progress section corresponds to one region of the light strip, and determining the target region of the light strip corresponding to the charging progress according to the correspondence comprises: determining a target charging progress section where the charging progress is located; determining, according to the correspondence, a region of the light strip corresponding to the target charging progress section to be the target region.
4. The method for charging progress display according to clause 3, wherein the light strip comprises a first strip-like region, the first region comprises a plurality of sub-regions arranged in an extension direction of the first region, and the number of sub-regions comprised in regions corresponding to different charging progress sections is different, wherein the correspondence defines a correspondence between each charging progress section and at least one sub-region, and determining, according to the correspondence, the region of the light strip corresponding to the target charging progress section to be the target region comprises: determining, according to the correspondence, a region formed by at least one sub-region corresponding to the target charging progress section to be the target region.
5. The method for displaying charging progress according to clause 4, wherein the light strip further comprises a second region spaced apart from the first region, and the method further comprises: when the terminal is charging, controlling the second region to emit light, to show that the terminal is in a charging state.
6. The method for charging progress display according to clause 1, wherein before controlling the light strip to emit light according to the charging progress to show the charging progress, the method further comprises: detecting a pre-set operation, wherein the pre-set operation comprises at least one of: an operation of moving the terminal, an operation of inputting a pre-set gesture, a touch operation, or a voice input operation.
7. The method for charging progress display according to clause 1, further comprising: controlling the target region to stop emitting light after the target region emits light for a preset duration.
8. The method for charging progress display according to clause 1, wherein before controlling the light strip to emit light according to the charging progress, the method further comprises: determining whether the back side of the terminal is blocked and/or whether the back side of the terminal faces upwards; controlling the light strip to emit light according to the charging progress comprises: controlling the light strip to emit light according to the charging progress when the back side of the terminal is not blocked and/or the back side of the terminal faces upwards.
9. The method for charging progress display according to clause 8, further comprising: controlling the display screen of the terminal lighting up and displaying the charging progress, when the back side of the terminal is blocked and a front side of the terminal is not blocked and/or the back side faces downwards.
10. A terminal, wherein the terminal is provided with a light strip and a transparent rear cover on a back side of the terminal, the transparent rear cover entirely covers the back side of the terminal where the light strip is provided, wherein the back side opposite to a display screen of the terminal, the light strip is configured to emit light, and the transparent rear cover allows the light emitted by the light strip to pass through, wherein the terminal comprises a processor and a memory, the memory stores a computer program, and the processor is configured to run the computer program to execute the method for charging progress display according to any one of clauses 1-9.
11. A computer readable storage medium, wherein the computer readable storage medium stores a computer program, and the computer program is executed after being invoked by a processor, so as to implement the method for charging process display according to any one of clauses 1-9.

## Claims

1. A method for charging progress display, applied to display of a charging progress of an electronic device, wherein a back side of the electronic device is provided with a light strip and a transparent rear cover, the transparent rear cover entirely covering the back side of the electronic device provided with the light strip, wherein the back side is opposite to a display screen of the electronic device, the light strip is configured to emit light, and the transparent rear cover allows the light emitted by the light strip to pass through, wherein the method for charging progress display comprises:
acquiring a charging progress of the electronic device when the electronic device is charging; and
controlling the light strip to emit light according to the charging progress to show the charging progress.

2. The method for charging progress display according to claim 1, wherein controlling the light strip to emit light according to the charging progress comprises:
determining, according to a pre-stored correspondence between the charging progress and regions of the light strip, a target region of the light strip corresponding to the charging progress; and
controlling the target region to emit light.

3. The method for charging progress display according to claim 2, wherein the correspondence defines a relationship between a plurality of charging progress sections and a plurality of regions of the light strip, each charging progress section corresponding to one region of the light strip, and wherein determining the target region of the light strip corresponding to the charging progress according to the correspondence comprises:
determining a target charging progress section where the charging progress is located; and
determining, according to the correspondence, a region of the light strip corresponding to the target charging progress section to be the target region.

4. The method for charging progress display according to claim 3, wherein the light strip comprises a first strip-like region, the first strip-like region comprising a plurality of sub-regions arranged in an extension direction of the first region, and wherein regions corresponding to different charging progress sections comprise different numbers of sub-regions, wherein the correspondence defines a correspondence between each charging progress section and at least one sub-region, and wherein determining, according to the correspondence, the region of the light strip corresponding to the target charging progress section to be the target region comprises:
determining, according to the correspondence, a region formed by at least one sub-region corresponding to the target charging progress section to be the target region.

5. The method for displaying charging progress according to claim 4, wherein the light strip further comprises a second region spaced apart from the first strip-like region, and the method further comprises:
when the electronic device is charging, controlling the second region to emit light, to show that the electronic device is in a charging state.

6. The method for charging progress display according to any preceding claim, wherein before controlling the light strip to emit light according to the charging progress to show the charging progress, the method further comprises:
detecting a pre-set operation, wherein the pre-set operation comprises at least one of: an operation of moving the electronic device, an operation of inputting a pre-set gesture, a touch operation, or a voice input operation.

7. The method for charging progress display according to any previous claim, further comprising:
controlling the target region to stop emitting light after the target region emits light for a preset duration.

8. The method for charging progress display according to any preceding claim, wherein before controlling the light strip to emit light according to the charging progress, the method further comprises:
determining whether the back side of the electronic device is blocked and/or whether the back side of the electronic device faces upwards;
controlling the light strip to emit light according to the charging progress comprises:
controlling the light strip to emit light according to the charging progress when the back side of the electronic device is not blocked and/or the back side of the electronic device faces upwards.

9. The method for charging progress display according to claim 8, further comprising:
controlling the display screen of the electronic device to light up and display the charging progress when the back side of the electronic device is blocked and a front side of the electronic device is not blocked and/or when the back side faces downwards.

10. An electronic device, wherein the electronic device is provided with a light strip and a transparent rear cover on a back side of the electronic device, the transparent rear cover entirely covers the back side of the electronic device where the light strip is provided, wherein the back side is opposite to a display screen of the electronic device, the light strip is configured to emit light, and the transparent rear cover allows the light emitted by the light strip to pass through, wherein the electronic device comprises a processor and a memory, the memory stores a computer program, and the processor is configured to run the computer program to execute the method for charging progress display according to any one of claims 1-9.

11. A computer readable storage medium, wherein the computer readable storage medium stores a computer program, and the computer program is executed after being invoked by a processor, so as to implement the method for charging process display according to any one of claims 1-9.
